# EUROPÄISCHE PATENTSCHRIFT

(11) **EP 3 437 167 B1**
(45) Veröffentlichungstag und Bekanntmachung des Hinweises auf die Patenterteilung: **16.12.2020**
(21) Anmeldenummer: 17720743.8
(22) Anmeldetag: 25.04.2017
(51) Int. Cl.: H02G 5/06, H02G 5/10

(54) **WÄRMELEITENDE KERAMIKDURCHFÜHRUNG FÜR SCHALTANLAGEN**
HEAT-CONDUCTING CERAMIC BUSHING FOR SWITCHGEAR
TRAVERSÉE THERMOCONDUCTRICE EN CÉRAMIQUE POUR DES INSTALLATIONS DE COMMUTATION

(30) Priorität: 25.05.2016 DE 102016209134
(43) Veröffentlichungstag der Anmeldung: 06.02.2019
(73) Patentinhaber: Siemens Aktiengesellschaft, 80333 München (DE)
(72) Erfinder: KERN, Stefan, 60431 Frankfurt am Main (DE); LEITNER, Michael, 61440 Oberursel (DE); SANDKE, Max, 12439 Berlin (DE)
(86) Internationale Anmeldenummer: PCT/EP2017/059701
(87) Internationale Veröffentlichungsnummer: WO 2017/202559

(56) Entgegenhaltungen:
- EP-A2- 0 810 705
- EP-A2- 1 511 146
- DE-A1-102014 200 762
- GB-A- 1 133 270
- US-A- 3 621 109

## Beschreibung

Die Erfindung betrifft eine Stromdurchführung für Schaltanlagen, insbesondere gasisolierte Schaltanlagen, und Schaltanlagen mit einer solchen Stromführung.

Aus dem Stand der Technik sind Gießharzdurchführungen, die zwischen metallischen Kapselungen einer gasisolierten Schaltanlage angeordnet sind, bekannt.

Solche Gießharzdurchführungen bedingen, dass der Wärmeaustausch zwischen zwei Behältern, zwischen denen eine solche Durchführung angeordnet ist, sehr gering ist. Der geringe Wärmeaustausch zwischen den Behältern basiert auf der geringen Wärmeleitfähigkeit der Gießharzdurchführung von etwa 0.8 bis 1,1 Watt pro Meter und Kelvin. Aufgrund des geringen Wärmeaustausches ist es nicht möglich, Wärme von lokalen Hotspots in kühlere Anlagenbereiche abzuführen.

Aus dem Stand der Technik sind auch die höhere Wärmeleitfähigkeit von Aluminiumoxiden und Aluminiumnitriden bekannt, diese sind aber aufgrund der Anforderung an die Isolierfähigkeit, die mechanische Beanspruchbarkeit und die Bearbeitbarkeit der Materialien, z. B. zum Einbringen von Steuerelektroden, nicht kostengünstig herstellbar und das Verbauen solcher Keramikdurchführungen mit einem sehr hohen Aufwand verbunden.

Durchführungen, die zur Gasraumabschottung beitragen, müssen außerdem gasdicht sein. Durch eine Gasraumabschottung ergibt sich die Möglichkeit, dass angrenzende Gasräume gewartet werden können und getrennte Anlagenbereiche unterschiedliche Drücke aufweisen können und nur minimale Gasmengen aus der Anlage entweichen.

Aus der DE 10 2013 215 760 A1 sind keramische Isolationselemente für Schaltanlagen bekannt, ohne dass die speziellen Anforderungen für Durchführungen adressiert werden.

Aus der DE 195 16 831 A1 ist eine Röntgenröhre mit einer keramischen Durchführung bekannt, die eine höhere Wärmeleitfähigkeit aufweist als eine Gießharzdurchführung, die aber nicht auf die mechanischen Anforderungen oder die Notwendigkeit der Platzierung von Steuerelektroden eingeht.

Aus der US 3621109 ist ein isolierender, keramischer Stützkörper bekannt, wobei dieser mit beispielsweise Bolzen befestigt wird.

Die EP1511146A2 offenbart einen scheibenförmigen Stützisolator aus Gießharz, wobei der scheibenförmige Stützisolator aus Gießharz in einem Außenleiter schwimmend lagerbar ist.

Auch ist es aus der DE10201400762A2 bekannt, dass es vorteilhaft ist, in ein elektrisches Isolationselement aus Gießharz wärmeleitfähige, aber elektrisch isolierende, Strukturen aus Keramik einzubetten.

Aufgabe der Erfindung ist es nun, die genannten Nachteile aus dem Stand der Technik zu beheben und eine Durchführung bereitzustellen, die eine höhere Wärmeleitfähigkeit aufweist als eine Gießharzdurchführung und die mechanischen und elektrischen Anforderungen erfüllt.

Die Aufgabe wird durch den unabhängigen Anspruch 1 und die von diesem abhängigen Ansprüche gelöst.

In einem Ausführungsbeispiel ist die erfindungsgemäße Stromdurchführung für gasisolierte Schaltanlagen aus einem mehrteiligen metallischen Außenring oder einem einteiligen metallischen Außenring und einen einteiligen oder mehrteiligen formschlüssigen Einlegring, einem Stromleitungselement, einem scheibenförmigen Isolierelement aus einem keramischen Werkstoff, im folgenden keramisches scheibenförmiges Isolierelement, mit einem ersten Dichtungselement und einer Öffnung zur Aufnahme des Stromleitungselements, bevorzugt einem formschlüssigen Einlegring mit mindestens einem Einlegsegment, einem zweiten Dichtungselement, einem Befestigungselement, aufgebaut, und zwar derart, dass das keramische scheibenförmigen Isolierelement mit dem metallischen Außenring verbindbar ist, das keramische scheibenförmige Isolierelement über eine Außendurchmesserfläche, eine Innendurchmesserfläche und zwei Außenflächen verfügt, das Stromleitungselement über ein Befestigungselement mit dem keramischen scheibenförmigen Isolierelement verbindbar ist, und das keramische scheibenförmige Isolierelement mittels des mehrteiligen metallischen Außenrings oder des einteiligen metallischen Außenrings und des formschlüssigen Einlegrings im mehrteiligen metallischen Außenring oder im einteiligen metallischen Außenring lagerbar oder schwimmend lagerbar ist. Die Stromdurchführung weist ein Stromleitungselement für den Stromtransport durch die Durchführung aufweist. Dabei ist die Stromdurchführung mit dem scheibenförmigen Isolierelement aus einem keramischen Werkstoff weiter mit einem ersten Dichtungselement und einem zweiten Dichtungselement derart aufgebaut, dass das keramische scheibenförmigen Isolierelement über das erste Dichtungselement gasdicht mit dem metallischen Außen-ring verbindbar ist, das Stromleitungselement über das zweite Dichtungselement und ein Befestigungselement mit dem keramischen scheibenförmigen Isolierelement verbindbar ist, und das keramische scheibenförmige Isolierelement mittels des mehrteiligen metallischen Außenrings oder des formschlüssigen Einlegrings, mit dem mindestens einen Einlegsegment und dem einteiligen metallischen Außenring lagerbar oder schwimmend lagerbar ist

In der Ausführung mit einem mehrteiligen metallischen Außenring wird das keramische scheibenförmige Isolierelement bevorzugt zwischen zwei Teilen des mehrteiligen metallischen Außenrings gelagert und weiter bevorzugt mit einer Dichtung derart gelagert, dass das keramische scheibenförmige Isolierelement gasdicht im mehrteiligen metallischen Außenring gelagert wird, insbesondere schwimmend gelagert wird. Der mehrteilige metallische Außenring, kann in axialer Richtung geteilt sein, so dass der mehrteilige metallische Außenring aus zwei oder mehr metallischen Ringen besteht, oder der mehrteilige metallische Außenring, kann in radialer Richtung geteilt sein, so dass der mehrteilige metallische Außenring aus metallischen Ringsegmenten besteht. Das keramische scheibenförmige Isolierelement wird dann entweder zwischen den metallischen Ringen, die den metallischen Außenring bilden, gelagert oder schwimmend gelagert oder in den zum metallischen Außenring zusammenfügbar metallischen Ringsegmenten gelagert oder schwimmend gelagert. Der Begriff "geteilt" ist dabei so zu verstehen, dass der metallische Außenring in mehrere Teile aufgeteilt ist, diese Teile müssen nicht aus einem Teil entstanden sein, sondern können auch aus mehreren Ausgangsteilen gefertigt worden sein.

In der Ausführung mit einem mehrteiligen metallischen Außenring, der in axialer Richtung geteilt ist, werden die den metallischen Außenring bildenden metallischen Ringe bevorzugt mittels eines Bajonettverschlusses, einer Kombination aus Innen- und Außengewinde oder mittels Schrauben miteinander verbunden und so das keramische scheibenförmige Isolierelement in dem zusammengesetzten metallischen Außenring lagerbar oder schwimmend lagerbar ist.

In der Ausführung mit einem mehrteiligen metallischen Außenring, der in radialer Richtung geteilt ist, werden die den metallischen Außenring bildenden metallischen Ringsegmente bevorzugt mittels Schrauben oder Stiften miteinander verbunden und so das keramische scheibenförmige Isolierelement in dem zusammengesetzten metallischen Außenring lagerbar oder schwimmend lagerbar ist.

In der Ausführung mit einem einteiligen formschlüssigen Einlegring wird der formschlüssige Einlegring bevorzugt mittels eines Bajonettverschlusses im metallischen Außenring befestigt und so das keramische scheibenförmige Isolierelement zwischen dem metallischen Außenring und dem formschlüssigen Einlegring lagerbar oder schwimmend lagerbar ist.

In der Ausführung mit einem mehrteiligen formschlüssigen Einlegring greift der formschlüssige Einlegring bevorzugt in den metallischen Außenring derart ein, dass das keramische scheibenförmige Isolierelement zwischen dem metallischen Außenring und dem mehrteiligen formschlüssigen Einlegring lagerbar oder schwimmend lagerbar.

Weiter wird bevorzugt, dass das keramische scheibenförmige Isolierelement mittels des formschlüssigen Einlegrings, dem mindestens einen Einlegsegment und dem metallischen Außenring lagerbar oder schwimmend lagerbar ist

Bevorzugt ist das keramisch scheibenförmige Dichtungselement gasdicht mit dem metallischen Außenring verbunden oder verbindbar.

Auch wird bevorzugt, dass das Stromleitungselement über ein zweites Dichtungselement und ein das Befestigungselement mit dem keramischen scheibenförmigen Isolierelement verbindbar, insbesondere gasdicht verbindbar ist.

Durch den metallischen Außenring, insbesondere einen Außenring aus Aluminium, und den vorhergehend beschriebenen Aufbau der Stromdurchführung ist der Außendurchmesser des keramischen scheibenförmigen Isolierelements gesenkt gegenüber massiven keramischen Durchführungen. Durch eine möglichst große Öffnung, insbesondere in der Mitte des keramischen scheibenförmigen Isolierelements, zum Durchführen des Stromleitungselementes wird der Materialeinsatz weiter gesenkt. Gleichzeitig verbessert eine große Öffnung im keramischen scheibenförmigen Isolierelement die Fläche die zur Wärmeübertragung zwischen Stromleitungselement und dem keramischen scheibenförmigen Isolierelement. Die Kombination von einem formschlüssigen Einlegring mit mindestens einem Einlegsegment und dem keramischen scheibenförmigen Isolierelement ermöglicht auch die schwimmende Aufnahme des keramischen scheibenförmigen Isolierelements in den metallischen Außenring. Diese Aufnahme kann auch durch einen mehrteiligen metallischen Außenring bewirkt werden, wodurch der formschlüssige Einlegring nicht notwendig ist, um eine schwimmende Lagerung des keramischen scheibenförmigen Isolierelements zu bewirken. Dadurch wird ein Großteil der auf das keramische scheibenförmige Isolierelement wirkenden Kräfte, wie zum Beispiel Kräften resultierend aus dem Gewicht der Hauptstrombahn, Stromkräften in Kurzschlussfällen, Schaltkräften, Verschraubungskräften und aus Schwingungen resultierenden Kräften, vom metallischen Außenring aufgenommen. Dadurch verbleiben nur noch Kräfte, die auf das keramische scheibenförmige Isolierelement wirken, die beherrschbar sind, zum Beispiel durch die Dicke des keramischen scheibenförmigen Isolierelements. So wird durch die schwimmende Lagerung und eine ausreichende Wandstärke des keramischen scheibenförmigen Isolierelements ein hoher Widerstand gegen Bruchkräfte erreicht.
Der metallische Außenring ermöglicht desweiteren einen Wärmeaustausch zwischen den Behältern, zwischen denen er montiert ist.

Das mindestens eine Einlegsegment besteht dabei in einem Ausführungsbeispiel aus einem Kreissegment, das den Krümmungsradius des formschlüssigen Einlegrings besitzt und geeignet ist das oder die im Einlegring vorhandenen Fehlstellen zu schließen, und je Einlegsegment aus mindestens einem, bevorzugt zwei oder mehr Verbindungselementen, die geeignet sind eine Verbindung zwischen dem Einlegring und dem Einlegsegment herzustellen.

Der Einlegring kann einteilig oder mehrteilig ausgeführt sein.

Bevorzugt wird, dass das keramische scheibenförmige Isolierelement an der Innendurchmesserfläche eine Nut aufweist und in die Nut ein ringförmiges Feldsteuerelement aufnehmbar ist.

Auch wird bevorzugt, dass das keramische scheibenförmige Isolierelement auf beiden Außenflächen eine ringförmige Einsenkung in dem Bereich des keramischen scheibenförmigen Isolierelements aufweist, in dem die drei Grenzflächen eines Isoliergases, des Stromleitungselements oder des Befestigungselementes oder der Überwurfmutter und des keramischen scheibenförmigen Isolierelements aufeinandertreffen. Dieser Punkt in dem die drei Grenzflächen aufeinandertreffen wird auch als Trippelpunkt bezeichnet.

Bevorzugt wird auch, dass eine oder beide Außenflächen des keramischen scheibenförmigen Isolierelements eine oder mehrere Wellenkonturen aufweisen. Diese Wellenkonturen dienen der Verlängerung von Kriechstrecken und erhöhen so die Durchschlagsfestigkeit der Durchführung. Unter den Außenflächen werden die selben Flächen verstanden, die auch die ringförmigen Einsenkungen aufweisen können, also die den Gasräumen zugewandten Flächen und nicht die dem metallischen Außenring oder dem Stromleitungselement zugewandten Flächen.

Weiter bevorzugt wird, dass das Stromleitungselement mittels eines Überwurfringes als Befestigungselement in dem keramischen scheibenförmigen Isolierelements befestigt wird.

Insbesondere wird bevorzugt, dass der Überwurfring ein Innengewinde aufweist, das mit einem Außengewinde auf dem Umfang des Stromleitungselements verschraubbar ist. Alternativ kann der Überwurfring mit dem Stronmleitungselement auch einen Bajonettverschluss bilden.

Bevorzugt wird auch, dass Steuergeometrien an einer oder mehreren der folgenden Kanten vorgesehen sind,
- eine erste Steuergeometrie an einer Innenkante des metallischen Außenrings, die dem formschlüssigen Einlegring gegenüberliegt,
- eine zweite Steuergeometrie an einer Außenkante der Stromleitungselement, die der Kante mit dem Befestigungselement gegenüberliegt,
- eine dritte Steuergeometrie an der Kante des Befestigungselements oder des Überwurfrings, die zum metallischen Außenring hin und von dem keramischen scheibenförmigen Isolierelement weg weist, und
- eine vierte Steuergeometrie am formschlüssigen Einlegring und an dem einen oder den mehreren Einlegsegmenten an der jeweils von dem metallischen Außenring und dem keramischen scheibenförmigen Isolierelement weg weisenden Kante.

Steuergeometrien sind dabei räumliche Strukturen, die insbesondere eine Steuerung und/oder Beeinflussung von elektrischen und/oder elektromagnetischen Feldern ermöglichen.

Auch wird bevorzugt, dass die Außenflächen des keramischen scheibenförmigen Isolierelements poliert oder glasiert sind und der äußere Umfang und innere Umfang schleifend bearbeitet sind. Dabei ist anzumerken, dass die den inneren Umfang bildende Öffnung schleifend herstellbar ist. Die am inneren Umfang optional angeordnete Nut kann schleifend bei der Schaffung der Öffnung, die den inneren Umfang bildet, erzeugt werden, oder in einen zusätzlichen Arbeitsschritt.

Bevorzugt wird auch, dass der metallische Außenring aus Aluminium oder einer Aluminiumlegierung oder Edelstahl gebildet wird.

Weiter wird bevorzugt, dass das Stromleitungselement aus Kupfer oder einer Kupferlegierung oder Aluminium oder einer Aluminiumlegierung gebildet wird.

Auch wird bevorzugt, dass das keramische scheibenförmige Isolierelement aus Aluminiumoxid, bevorzugt Al2O3, oder Aluminiumnitrid, AlN, gebildet wird. Besonders bevorzugt wird, dass das keramische scheibenförmige Isolierelement aus hochreinem Aluminiumoxid, bevorzugt Al2O3, oder hochreinem Aluminiumnitrid, AlN, gebildet wird, wobei unter hochrein ein Anteil von mindestens 99% des jeweiligen Materials verstanden wird.

Auch bevorzugt wird, dass das keramische scheibenförmige Isolierelement aus Berylliumoxid oder Bornitrid oder Magnesiumoxid oder Siliciumaluminiumoxinitrid oder Siliciumcarbid oder Siliciumnitrid oder Titannitrid oder Titanoxid oder einer sogenannten Mullit-Keramik, einer Mischform aus Aluminium- und Siliciumoxid gebildet wird.

Bevorzugt wird auch, dass der metallische Außenring an seinem äußeren Umfang einen oder mehrere Kühlkörper aufweist, der oder die sich radial vom äußeren Umfang weg erstrecken. Der oder die Kühlkörper können dabei separate Kühlkörper sein, die mit dem metallischen Außenring verbunden sind oder verbindbar sind oder aber im metallischen Außenring integriert sein.

Ebenfalls bevorzugt wird, dass Nuten für die Aufnahme von Dichtungselementen, insbesondere des ersten und zweiten Dichtungselements, in metallischen Bauteilen vorhanden sind. Insbesondere wird bevorzugt, dass das Stromleitungselement eine Nut zur Aufnahme eines zweiten Dichtungselements derart aufweist, dass das Stromleitungselement gasdicht mit dem keramischen scheibenförmigen Isolierelement verbindbar ist, und/oder der metallische Außenring eine Nut zur Aufnahme eines ersten Dichtungselements derart aufweist, dass keramische scheibenförmige Isolierelement gasdicht mit dem metallischen Außenring verbindbar ist.

Bevorzugt wird weiter, dass die Stromdurchführung gasdicht ausgeführt ist.

Weiter wird bevorzugt, dass eine Schaltanlage für Mittelspannungsanlagen oder Hochspannungsanlagen mit einer Stromdurchführung nach einem oder mehreren der vorstehenden Ausführungen, wobei mindestens ein Teil der Schaltanlage mit einem Isoliergas befüllt oder befüllbar ist.

Im Folgenden wird der Erfindungsgegenstand anhand von Figuren näher erläutert:
- Figur 1:: Schnitt durch eine erfindungsgemäße Stromdurchführung, die zwischen zwei Behältern einer gasisolierten Schaltanlage angeordnet ist;
- Figur 2:: Explosionszeichnung einer erfindungsgemäßen Stromdurchführung;
- Figur 3:: erfindungsgemäße Stromdurchführung mit zusätzlichen Kühlkörpern;

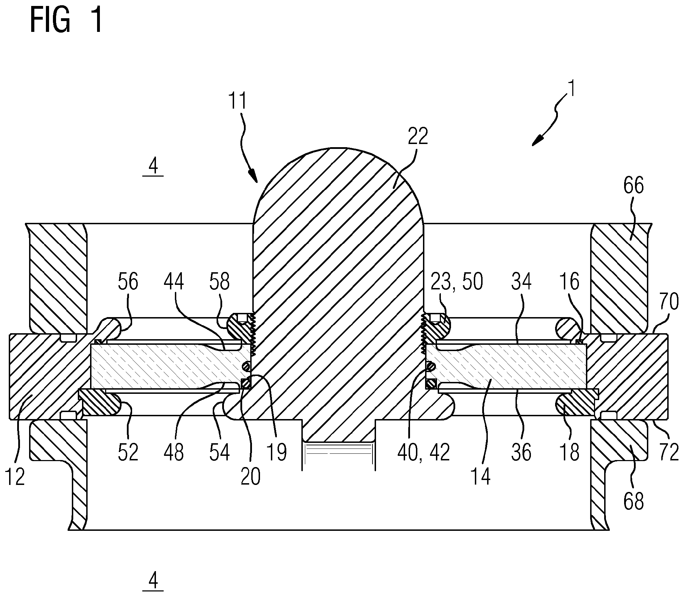

Die Figur 1 zeigt eine erfindungsgemäße Stromdurchführung 11 in einer durch die zwei Behälter 66, 68 angedeuteten gasisolierten Schaltanlage 1.

Die Stromdurchführung 11 wird dabei durch einen Stromleitungselement 22 gebildet, das mittels eines Befestigungselementes 23 in einem keramischen scheibenförmigen Isolierelement 14 gehalten wird, und durch ein zweites Dichtungselement 20, das optional in einer Nut 19 lagerbar ist, gasdicht ausgeführt sein kann. Die Nut 19 kann alternativ im Stromleitungselement 22, in Figur 1 nicht gezeigt, oder im keramischen scheibenförmigen Isolierelement 14 vorgesehen sein. Das keramische scheibenförmige Isolierelement 14 ist in einem metallischen Außenring 12 einlegbar und im metallischen Außenring 12 mittels eines Einlegrings 18 und mittels eines, hier nicht gezeigten, Einlegsegmentes schwimmend lagerbar.

Der metallische Außenring 12 weist zwei Verbindungsflächen 70, 72 auf, über die er mit den jeweiligen Behältern der gasisolierten Schaltanlage 66, 68 verbindbar ist.

Das keramische scheibenförmige Isolierelement 14 weist in diesem Beispiel eine optionale Nut 40 auf, in die ein optionales ringförmiges Feldsteuerelement 42 aufgenommen ist.

Um die Spannungsfestigkeit zu erreichen oder zu erhöhen, sind bei der gezeigten Stromdurchführung 11 optionale Steuergeometrien 52, 54, 56, 58 vorhanden. Eine erste Steuergeometrie 56 ist am metallischen Außenring 12 angeordnet.

Eine zweite Steuergeometrie 54 ist am Stromleitungselement 22 an einer Verbreiterung vorhanden, die ein Durchrutschen des Stromleitungselements 22 durch das keramische scheibenförmige Isolationselement 14 verhindert.
Eine dritte Steuergeometrie 58 ist am Befestigungselement 23 oder an einer Überwurfmutter 50 vorgesehen.

Eine vierte Steuergeometrie 52 ist am formschlüssigen Einlegring 18 und mindestens einem in Figur 1 nicht gezeigten Einlegsegment 24, 26 vorhanden.

Die hier gezeigten Steuergeometrien können jeweils alle realisiert sein oder aber auch nur einzeln, bzw. auch gar nicht realisiert sein.

Zur weiteren Erhöhung der Spannungsfestigkeit kann optional auch eine ringförmige Einsenkung 44, 48 auf einer oder beiden Außenflächen 34, 36 des keramischen scheibenförmigen Isolierelements 14 vorhanden sein.

Diese Einsenkungen 44, 48 sind vorzugsweise in dem Bereich des keramischen scheibenförmigen Isolierelements 14 angeordnet, in dem die drei Grenzflächen des Isoliergases 4, des Stromleitungselements 22 oder des Befestigungselementes 23 oder der Überwurfmutter 50 und des keramischen scheibenförmigen Isolierelements 14 aufeinandertreffen.

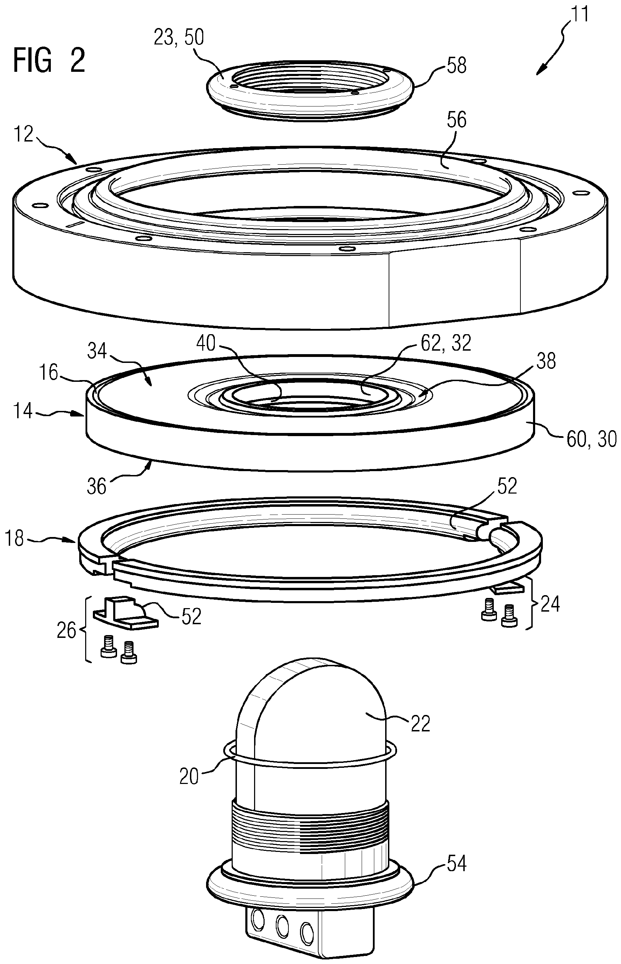

Die Figur 2 zeigt eine Explosionszeichnung einer erfindungsgemäßen Stromdurchführung 11. In dieser Explosionszeichnung sind insbesondere die einzelnen Bauteile der Stromdurchführung 11 gut zu erkennen. Auch ist der Zeichnung die Aufbaurichtung entnehmbar. So wird das Stromleitungselement 22 von einer Seite durch das keramische scheibenförmige Isolationselement geführt, während das Befestigungselement 23 oder die Überwurfmutter 50 mit einer optionalen dritten Steuergeometrie von der gegenüberliegenden Seite des keramischen scheibenförmigen Isolierelementes 14 aufgesteckt wird. Das Befestigungselement 23 oder die Überwurfmutter 50 halten das Stromleitungselement 22 im zusammengebauten Zustand in dem keramischen scheibenförmigen Isolierelement 14.
Um eine ausreichende Gasdichtigkeit bei der Verbindung zwischen dem Stromleitungselement 22 und dem keramischen scheibenförmigen Isolierelement 14 zu erreichen, ist ein zweites Dichtungselement 20 vorgesehen.

Das keramische scheibenförmige Isolierelement 14 mit Einsenkungen 38, in Figur 1 mit 44 und 48 bezeichnet, im keramischen scheibenförmigen Isolierelement 14 ist schwimmend im metallischen Außenring 12 lagerbar und wird im verbauten Zustand durch den formschlüssigen Einlegring 18 im metallischen Außenring 12 gehalten. Der formschlüssige Einlegring 18 weist dabei optional eine vierte Steuergeometrie 52 auf, die auf bei dem mindestens einen, hier zwei gezeigten Einlegsegmenten 24, 26 vorhanden ist und fortgeführt wird.

Um eine Gasdichtigkeit zwischen dem metallischen Außenring 16 und dem keramischen scheibenförmigen Isolierelement 14 zu erreichen, ist ein erstes Dichtmittel 16 vorgesehen.

Optional kann die Stromdurchführung 22 in einem verbreiterten Abschnitt, der der Halterung im keramischen scheibenförmigen Isolierelement 14 dient, eine zweite Steuergeometrie 54 aufweisen.

Der metallische Außenring 12 kann optional eine erste Steuergeometrie 56 aufweisen.

Die Außenflächen 34, 36 des keramischen scheibenförmigen Isolierelements 14 können optional poliert sein und der äußere Umfang, auch Aussendurchmesserfläche, 60 und innere Umfang, auch Innendurchmesserfläche, 62 des scheibenförmigen Isolierelements 14 können optional schleifend bearbeitet sein.

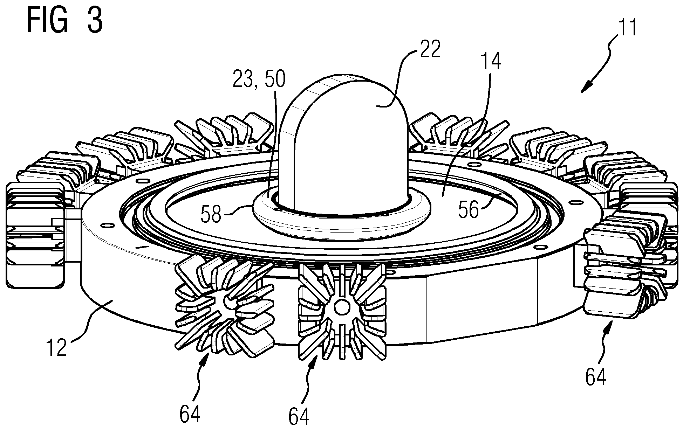

Die Figur 3 zeigt ein weiteres Ausführungsbeispiel in einer perspektivischen Darstellung einer erfindungsgemäßen Stromdurchführung. Die Stromdurchführung ist grundsätzlich analog zu der Stromdurchführung aus Figur 2 aufgebaut, wobei zusätzlich am metallischen Außenring 12 ein oder mehrere Kühlkörper 64 vorgesehen sind. Die Kühlkörper 64 sind am Umfang des Außendurchmessers des metallischen Außenringes 12 angeordnet, um so im verbauten Zustand Wärme nicht nur an die beiden angrenzenden Behälter 66, 68, wie sie in Figur 1 gezeigt sind, abgeben zu können, sondern auch über die Kühlkörper 64.

Das Stromleitungselement 22 ist - wie bereits beschrieben - durch den Innendurchmesser des keramischen scheibenförmigen Isolierelements 14 gesteckt und in diesem mittels eines Befestigungselementes 23 oder eines Überwurfringes 50 befestigt.

Auch gezeigt ist die erste Steuergeometrie 56 am metallischen Außenring 12 und die dritte Steuergeometrie 58 am Befestigungselement 23 oder Überwurfring 50. Auch das keramische scheibenförmige Isolierelement 14, das im metallischen Außenring 12 gehalten wird, ist dargestellt.

### Bezugszeichenliste

- 1: Gasisolierte Schaltanlage
- 4: Isoliergas
- 11: Stromdurchführung
- 12: metallischer Außenring
- 14: keramisches scheibenförmiges Isolierelement
- 15: Nut zur Aufnahme des ersten Dichtungselements
- 16: erstes Dichtungselement
- 18: formschlüssiger Einlegring
- 19: Nut zur Aufnahme des zweiten Dichtungselements
- 20: zweites Dichtungselement
- 22: Stromleitungselement
- 23: Befestigungselemet
- 24, 26: Einlegsegment
- 28: Öffnung im keramischen scheibenförmigen Isolierelement
- 30: Außendurchmesserfläche des keramischen scheibenförmigen Isolierelements
- 32: Innendurchmesserfläche des keramischen scheibenförmigen Isolierelements
- 34, 36: Außenflächen des keramischen scheibenförmigen Isolierelements
- 38: Einsenkungen des keramischen scheibenförmigen Isolierelements
- 40: Nut an der Innendurchmesserfläche des keramischen scheibenförmigen Isolierelements
- 42: ringförmiges Feldsteuerelement
- 44, 48: ringförmige Einsenkung
- 50: Überwurfring
- 52: vierte Steuergeometrie am formschlüssigen Einlegring und/oder Einlegsegment
- 54: zweite Steuergeometrie an dem Stromleitungselement
- 56: erste Steuergeometrie am metallischen Außenring
- 58: dritte Steuergeometrie am Befestigungselement oder Überwurfring
- 60: Äußerer Umfang oder Außendurchmesserfläche des keramisches scheibenförmiges Isolierelements, bevorzugt schleifend bearbeitet
- 62: Innerer Umfang oder Innendurchmesserfläche des keramisches scheibenförmiges Isolierelements, bevorzugt schleifend bearbeitet
- 64: Kühlkörper
- 66, 68: Behälter der gasisolierten Schaltanlage
- 70, 72: Verbindungsflächen des äußeren Metallrings

## Patentansprüche

1. Stromdurchführung (11) für gasisolierte Schaltanlage (1) wobei die Stromdurchführung (11) mit
- einem mehrteiligen metallischen Außenring (12) oder einem einteiligen metallischen Außenring (12) und einen einteiligen oder mehrteiligen formschlüssigen Einlegring (18),
- einem Stromleitungselement (22),
- einem scheibenförmigen Isolierelement (14) aus einem keramischen Werkstoff mit einer Öffnung (28) zur Aufnahme des Stromleitungselements (22),
- einem Befestigungselement (23), und
derart aufgebaut ist, dass
- das keramische scheibenförmigen Isolierelement (14) mit dem metallischen Außenring (12) verbindbar ist,
- das keramische scheibenförmige Isolierelement (14) über eine Außendurchmesserfläche (30), eine Innendurchmesserfläche (32) und zwei Außenflächen (34, 36) verfügt,
- das Stromleitungselement (22) über das Befestigungselement (23) mit dem keramischen scheibenförmigen Isolierelement (14) verbindbar ist, und
- das keramische scheibenförmige Isolierelement (14) mittels des mehrteiligen metallischen Außenrings (12) oder des einteiligen metallischen Außenrings (12) und des formschlüssigen Einlegrings (18) im mehrteiligen metallischen Außenring (12) oder im einteiligen metallischen Außenring (12) lagerbar oder schwimmend lagerbar ist,
wobei die Stromdurchführung (11) mit dem scheibenförmigen Isolierelement (14) aus einem keramischen Werkstoff weiter mit einem ersten Dichtungselement (16) und einem zweiten Dichtungselement (20) derart aufgebaut ist, dass das keramische scheibenförmigen Isolierelement (14) über das erste Dichtungselement (16) gasdicht mit dem metallischen Außenring (12) verbindbar ist, das Stromleitungselement (22) über das zweite Dichtungselement (20) und ein Befestigungselement (23) mit dem keramischen scheibenförmigen Isolierelement (14) verbindbar ist.

2. Stromdurchführung (11) nach Anspruch 1, wobei die Stromdurchführung (11) mit dem formschlüssigen Einlegring (18) mit mindestens einem Einlegsegment (24, 26) derart aufgebaut ist, dass das keramische scheibenförmige Isolierelement (14) mittels des formschlüssigen Einlegrings (18), dem mindestens einen Einlegsegment (24, 26) und dem metallischen Außenring (12) lagerbar oder schwimmend lagerbar, ist.

3. Stromdurchführung (11) nach einem der vorstehenden Ansprüche,
**dadurch gekennzeichne**t, dass das keramische scheibenförmige Isolierelement (14) an der Innendurchmesserfläche (32) eine Nut (40) aufweist und in die Nut (40) ein ringförmiges Feldsteuerelement (42) aufnehmbar ist.

4. Stromdurchführung (11) nach einem der vorstehenden Ansprüche,
**dadurch gekennzeichnet, dass** das keramische scheibenförmige Isolierelement (14) auf beiden Außenflächen (34, 36) eine ringförmige Einsenkung (44, 48) in dem Bereich des keramischen scheibenförmigen Isolierelements (14) aufweist, in dem die drei Grenzflächen eines Isoliergases (4), des Stromleitungselements (22) oder des Befestigungselementes (23) oder der Überwurfmutter (50) und des keramischen scheibenförmigen Isolierelements (14) aufeinandertreffen.

5. Stromdurchführung (11) nach einem der vorstehenden Ansprüche,
**dadurch gekennzeichnet, dass** das Stromleitungselement (22) mittels eines Überwurfringes (50) als Befestigungselement (23) in dem keramischen scheibenförmigen Isolierelements (14) befestigt wird.

6. Stromdurchführung (11) nach Anspruch 5,
**dadurch gekennzeichnet, dass** der Überwurfring (50) ein Innengewinde aufweist, das mit einem Außengewinde auf dem Umfang des Stromleitungselements (22) verschraubbar ist.

7. Stromdurchführung (11) nach einem der Ansprüche 2 bis 6,
**dadurch gekennzeichnet, dass** Steuergeometrien an einer oder mehreren der folgenden Kanten vorgesehen sind,
- eine erste Steuergeometrie (56) an einer Innenkante des metallischen Außenrings (12), die dem formschlüssigen Einlegring (18) gegenüberliegt,
- eine zweite Steuergeometrie (54) an einer Außenkante der Stromleitungselement (22), die der Kante mit dem Befestigungselement (23) gegenüberliegt,
- eine dritte Steuergeometrie (58) an der Kante des Befestigungselements (23) oder des Überwurfrings (50), die zum metallischen Außenring (12) hin und von dem keramischen scheibenförmigen Isolierelement (14) weg weist, und
- eine vierte Steuergeometrie (52) am formschlüssigen Einlegring (18) und an dem einen oder den mehreren Einlegsegmenten an der jeweils von dem metallischen Außenring und dem keramischen scheibenförmigen Isolierelement (14) weg weisenden Kante.

8. Stromdurchführung (11) nach einem der vorstehenden Ansprüche,
**dadurch gekennzeichnet, dass** die Außenflächen (34, 36) des keramischen scheibenförmigen Isolierelements (14) poliert oder glasiert sind und der äußere Umfang (60) und innere Umfang (62) des keramischen scheibenförmigen Isolierelements (14) schleifend bearbeitet sind.

9. Stromdurchführung (11) nach einem der vorstehenden Ansprüche,
**dadurch gekennzeichnet, dass** der metallische Außenring (12) aus Aluminium oder einer Aluminiumlegierung oder Edelstahl gebildet wird.

10. Stromdurchführung (11) nach einem der vorstehenden Ansprüche,
**dadurch gekennzeichnet, dass** das Stromleitungselement (22) aus Kupfer oder einer Kupferlegierung oder Aluminium oder einer Aluminiumlegierung gebildet wird.

11. Stromdurchführung (11) nach einem der vorstehenden Ansprüche,
**dadurch gekennzeichnet, dass** das keramische scheibenförmige Isolierelement (14) aus Aluminiumoxid, bevorzugt Al2O3, oder Aluminiumnitrid, AlN, oder aus Berylliumoxid oder Bornitrid oder Magnesiumoxid oder Siliciumaluminiumoxinitrid oder Siliciumcarbid oder Siliciumnitrid oder Titannitrid oder Titanoxid oder einer sogenannten Mullit-Keramik, einer Mischform aus Aluminium- und Siliciumoxid gebildet wird.

12. Stromdurchführung (11) nach einem der vorstehenden Ansprüche,
**dadurch gekennzeichnet, dass** der metallische Außenring (12) an seinem äußeren Umfang einen oder mehrere Kühlkörper (64) aufweist, der oder die sich radial vom äußeren Umfang weg erstrecken.

13. Schaltanlage für Mittelspannungsanlagen oder Hochspannungsanlagen mit einer Stromdurchführung (11) nach einem der vorstehenden Ansprüche, wobei mindestens ein Teil der Schaltanlage mit einem Isoliergas befüllt oder befüllbar ist.

## Claims

1. Electrical bushing (11) for a gas-insulated switchgear assembly (1), wherein the electrical bushing (11) has
- a multi-part metallic outer ring (12) or a single-part metallic outer ring (12) and a single-part or multi-part form-fitting insert ring (18),
- a current conduction element (22),
- a disc-shaped insulating element (14) consisting of a ceramic material and having an opening (28) for receiving the current conduction element (22),
- a fastening element (23), and
is constructed in such a way that
- the ceramic disc-shaped insulating element (14) is connectable to the metallic outer ring (12),
- the ceramic disc-shaped insulating element (14) has an outer diameter face (30), an inner diameter face (32) and two outer faces (34, 36),
- the current conduction element (22) is connectable to the ceramic disc-shaped insulating element (14) via the fastening element (23), and
- the ceramic disc-shaped insulating element (14) is mountable or is mountable in floating fashion by means of the multi-part metallic outer ring (12) or the single-part metallic outer ring (12) and the form-fitting insert ring (18) in the multi-part metallic outer ring (12) or in the single-part metallic outer ring (12),
wherein the electrical bushing (11) having the disc-shaped insulating element (14) consisting of a ceramic material, further having a first sealing element (16) and a second sealing element (20), is constructed in such a way that the ceramic disc-shaped insulating element (14) is connectable in gas-tight fashion to the metallic outer ring (12) via the first sealing element (16), and the current conduction element (22) is connectable to the ceramic disc-shaped insulating element (14) via the second sealing element (20) and a fastening element (23).

2. Electrical bushing (11) according to Claim 1, wherein the electrical bushing (11) having the form-fitting insert ring (18) having at least one insert segment (24, 26) is constructed in such a way that the ceramic disc-shaped insulating element (14) is mountable or is mountable in floating fashion by means of the form-fitting insert ring (18), the at least one insert segment (24, 26) and the metallic outer ring (12).

3. Electrical bushing (11) according to either of the preceding claims,
**characterized in that**
the ceramic disc-shaped insulating element (14) has a groove (40) in the inner diameter face (32), and a ring-shaped field control element (42) is receivable in the groove (40).

4. Electrical bushing (11) according to one of the preceding claims,
**characterized in that**
the ceramic disc-shaped insulating element (14) has, in both outer faces (34, 36), a ring-shaped notch (44, 48) **in that** region of the ceramic disc-shaped insulating element (14) in which the three interfaces of an insulating gas (4), the current conduction element (22) or the fastening element (23) or the union nut (50) and the ceramic disc-shaped insulating element (14) meet.

5. Electrical bushing (11) according to one of the preceding claims,
**characterized in that**
the current conduction element (22) is fastened in the ceramic disc-shaped insulating element (14) by means of a union ring (50) as fastening element (23).

6. Electrical bushing (11) according to Claim 5,
**characterized in that**
the union ring (50) has an internal thread, which is screwable to an external thread on the circumference of the current conduction element (22).

7. Electrical bushing (11) according to one of Claims 2 to 6,
**characterized in that**
control geometries are provided on one or more of the following edges:
- a first control geometry (56) on an inner edge, opposite the form-fitting insert ring (18), of the metallic outer ring (12),
- a second control geometry (54) on an outer edge, opposite the edge with the fastening element (23), of the current conduction element (22),
- a third control geometry (58) on that edge of the fastening element (23) or the union ring (50) which points towards the metallic outer ring (12) and away from the ceramic disc-shaped insulating element (14), and
- a fourth control geometry (52) on the form-fitting insert ring (18) and on the one or more insert segments on the edge which points away from the metallic outer ring and the ceramic disc-shaped insulating element (14), respectively.

8. Electrical bushing (11) according to one of the preceding claims,
**characterized in that**
the outer faces (34, 36) of the ceramic disc-shaped insulating element (14) are polished or glazed, and the outer circumference (60) and inner circumference (62) of the ceramic disc-shaped insulating element (14) are machined by grinding.

9. Electrical bushing (11) according to one of the preceding claims,
**characterized in that**
the metallic outer ring (12) is formed from aluminium or an aluminium alloy or stainless steel.

10. Electrical bushing (11) according to one of the preceding claims,
**characterized in that**
the current conduction element (22) is formed from copper or a copper alloy or aluminium or an aluminium alloy.

11. Electrical bushing (11) according to one of the preceding claims,
**characterized in that**
the ceramic disc-shaped insulating element (14) is formed from aluminium oxide, preferably Al₂O₃, or aluminium nitride, AlN, or from beryllium oxide or boron nitride or magnesium oxide or silicon aluminium oxynitride or silicon carbide or silicon nitride or titanium nitride or titanium oxide or a so-called mullite ceramic, a mixed form of aluminium and silicon oxide.

12. Electrical bushing (11) according to one of the preceding claims,
**characterized in that**
the metallic outer ring (12) has, on its outer circumference, one or more heat sinks (64), which extend(s) radially away from the outer circumference.

13. Switchgear assembly for medium-voltage installations or high-voltage installations having an electrical bushing (11) according to one of the preceding claims, wherein at least part of the switchgear assembly is filled or is fillable with an insulating gas.

## Revendications

1. Traversée (11) de courant pour des installations (1) de distribution à isolation pour du gaz, la traversée (11) de courant comprenant
- une bague (12) métallique extérieure en plusieurs pièces ou une bague (12) métallique extérieure en une pièce et une bague (18) d'insertion à complémentarité de forme en une pièce ou en plusieurs pièces,
- un élément (22) de conduction du courant,
- un élément (14) isolant en forme de rondelle en un matériau céramique ayant une ouverture (28) de réception de l'élément (22) de conduction du courant,
- un élément (23) de fixation, et
constitué de manière à ce que
- l'élément (14) isolant céramique en forme de rondelle peut être relié à la bague (12) extérieure,
- l'élément (14) isolant céramique en forme de rondelle dispose d'une surface (30) de diamètre extérieur, d'une surface (32) de diamètre intérieur et de deux surfaces (34, 36) extérieures,
- l'élément (22) de conduction du courant peut, par l'élément (23) de fixation, être relié à l'élément (14) isolant céramique en forme de rondelle, et
- l'élément (14) isolant céramique en forme de rondelle peut, au moyen de la bague (12) extérieure métallique en plusieurs pièces ou de la bague (12) extérieure métallique en une pièce et de la bague (18) d'insertion à complémentarité de forme, être logé ou être logé flottant dans la bague (12) extérieure métallique en plusieurs pièces ou dans la bague (12) extérieure en une pièce,
dans laquelle la traversée (11) de courant, ayant l'élément (14) en forme de rondelle en un matériau céramique, est constituée, en outre, en ayant un premier élément (16) d'étanchéité et un deuxième élément (20) d'étanchéité, de manière à pouvoir relier, d'une manière étanche au gaz, l'élément (14) isolant céramique en forme de rondelle par le premier élément (16) d'étanchéité à la bague (12) extérieure métallique, de manière à pouvoir relier l'élément (22) de conduction du courant, par le deuxième élément (20) d'étanchéité et un élément (23) de fixation, à l'élément (14) isolant céramique en forme de rondelle.

2. Traversée (11) de courant suivant la revendication 1, dans laquelle la traversée (11) de courant, par la bague (18) d'insertion à complémentarité de forme, ayant au moins un segment (24, 26) d'insertion, est constituée de manière à pouvoir loger ou à pouvoir loger flottant l'élément (14) isolant céramique en forme de rondelle, au moyen de la bague (18) d'insertion à complémentarité de forme, dans le au moins un segment (24, 26) d'insertion et la bague (112) extérieure métallique.

3. Traversée (112) de courant suivant l'une des revendications précédentes,
**caractérisée en ce que**
l'élément (14) isolant céramique en forme de rondelle a une rainure (40) sur la surface (32) de diamètre intérieur et un élément (42) annulaire de commande du champ peut être reçu dans la rainure (40).

4. Traversée (11) de courant suivant l'une des revendications précédentes,
**caractérisée en ce que**
l'élément (14) isolant céramique en forme de rondelle a, sur deux surfaces (34, 36) extérieures, un chambrage (44, 48) annulaire dans la région de l'élément (14) isolant céramique en forme de rondelle, dans lequel se rencontrent les trois surfaces limites d'un gaz (4) isolant, de l'élément (22) de conduction du courant ou de l'élément (23) de fixation ou de l'écrou (50) d'accouplement et de l'élément (14) isolant céramique en forme de rondelle.

5. Traversée (11) de courant suivant l'une des revendications précédentes,
**caractérisée en ce que**
l'élément (22) de conduction du courant est fixé, au moyen d'une collerette (50) de fixation comme élément (23) de fixation, dans l'élément (14) isolant céramique en forme de rondelle.

6. Traversée (11) de courant suivant la revendication 5,
**caractérisé en ce que**
la collerette (50) de fixation a un taraudage, qui peut être vissé dans un filetage du pourtour de l'élément (22) de conduction du courant.

7. Traversée (11) de courant suivant l'une des revendications 2 à 6,
**caractérisée en ce que**
des géométries de commande sont prévues sur un ou plusieurs des bords suivants,
- une première géométrie (56) de commande sur un bord intérieur de la bague (12) extérieure métallique, qui est opposée à la bague (18) d'insertion à complémentarité de forme,
- une deuxième géométrie (54) de commande sur un bord extérieur de l'élément (22) de conduction du courant, qui est opposé au bord ayant l'élément (23) de fixation,
- une troisième géométrie (58) de commande sur le bord de l'élément (23) de fixation ou de la bague (50) de fixation, qui va vers la bague (12) extérieure métallique et s'éloigne de l'élément (14) isolant céramique en forme de rondelle, et
- une quatrième géométrie (52) de commande sur la bague (18) d'insertion à complémentarité de forme et sur le un ou les plusieurs segments d'insertion sur le bord s'éloignant de la bague extérieure métallique et de l'élément (14) isolant céramique en forme de rondelle.

8. Traversée (11) de courant suivant l'une des revendications précédentes,
**caractérisée en ce que**
les surfaces (34, 36) extérieures de l'élément (14) isolant céramique en forme de rondelle sont polies ou glacées et le pourtour (60) extérieur et le pourtour (62) intérieur de l'élément (14) isolant céramique en forme de rondelle sont usinés par meulage.

9. Traversée (11) de courant suivant l'une des revendications précédentes,
**caractérisée en ce que**
la bague (12) extérieure métallique est en aluminium ou en un alliage d'aluminium ou en acier fin.

10. Traversée (11) de courant suivant l'une des revendications précédentes,
**caractérisée en ce que**
l'élément (22) de conduction du courant est en cuivre ou en un alliage de cuivre ou en aluminium ou en un alliage d'aluminium.

11. Traversée (11) de courant suivant l'une des revendications précédentes,
**caractérisée en ce que**
l'élément (14) isolant céramique en forme de rondelle est en oxyde d'aluminium, de préférence en Al2O3, ou en nitrure d'aluminium, AlN, ou en oxyde de béryllium ou en nitrure de bore ou en oxyde de magnésium ou en oxynitrure de silicium et d'aluminium ou en carbure de silicium ou en nitrure de silicium ou en nitrure de titane ou en oxyde de titane ou en une céramique dite mullite, forme mixte d'oxyde d'aluminium et d'oxyde de silicium.

12. Traversée (11) de courant suivant l'une des revendications précédentes,
**caractérisée en ce que**
la bague (12) extérieure métallique a, sur son pourtour extérieur, un ou plusieurs corps (64) de refroidissement, qui s'étendent en s'éloignant radialement du pourtour extérieur.

13. Installation de distribution pour des installations de moyenne tension ou des installations de haute tension et ayant une traversée (11) de courant suivant l'une des revendications précédentes, au moins une partie de l'installation de distribution étant remplie d'un gaz isolant ou pouvant l'être.
